# EUROPÄISCHE PATENTANMELDUNG

(11) **EP 3 988 499 A1**
(43) Veröffentlichungstag der Anmeldung: **27.04.2022**
(21) Anmeldenummer: 21201139.9
(22) Anmeldetag: 06.10.2021
(51) Int. Cl.: B67D 7/04, B67D 7/30

(54) **VERFAHREN ZUR VERSORGUNG EINER MOBILEN NUTZEINHEIT MIT EINEM VERBRAUCHSTOFF**

(30) Priorität: 21.10.2020 DE 102020127743
(71) Anmelder: Deere & Company, Moline, IL 61265 (US)
(72) Erfinder: FRITZ, NORBERT, 68163 Mannheim (DE); KREMMER, MARTIN, 68163 Mannheim (DE)
(74) Vertreter: Dehnhardt, Florian Christopher

(57) **Zusammenfassung**

Die Erfindung betrifft ein Verfahren zur Versorgung einer mobilen Nutzeinheit (10, 16, 18) mit einem Verbrauchstoff (14). Dabei wird der Verbrauchstoff (14) mittels eines beweglichen Förderanschlusses (28) einer Wartungsstation (12, 20, 42) zu einem Versorgungseingang (30) der Nutzeinheit (10) gefördert. Der Versorgungseingang (30) der Nutzeinheit (10, 16, 18) wird identifiziert. Danach wird der Förderanschluss (28) mit dem identifizierten Versorgungseingang (30) fluidisch verbunden. Der Verbrauchstoff (14) wird zum Versorgungseingang (30) gefördert. Nach beendeter Förderung des Verbrauchstoffes (14) wird der Förderanschluss (28) von dem Versorgungseingang (30) fluidisch getrennt.

## Beschreibung

Die Erfindung betrifft ein Verfahren zur Versorgung einer mobilen Nutzeinheit mit einem Verbrauchstoff.

Mobile Nutzeinheiten, wie z.B. land- oder forstwirtschaftliche Maschinen, werden üblicherweise in definierten Zeitintervallen gewartet. Zu den Wartungs- oder Servicemaßnahmen gehört vielfach auch eine Versorgung der Nutzeinheit mit mindestens einem Verbrauchstoff, z.B. einem Motoröl.

Der vorliegenden Erfindung liegt die Aufgabe zugrunde, die Versorgung einer mobilen Nutzeinheit mit einem Verbrauchstoff effizient durchzuführen.

Diese Aufgabe wird durch ein Verfahren mit den Merkmalen des Patentanspruches 1 gelöst.

Weitere vorteilhafte Ausgestaltungen des erfindungsgemäßen Verfahrens gehen aus den Unteransprüchen hervor.

Das Verfahren gemäß Patentanspruch 1 dient einer Versorgung einer mobilen Nutzeinheit mit einem Verbrauchstoff (z.B. Schmierstoff für gelenkige bzw. bewegliche Komponenten der Nutzeinheit oder Kraftstoff für einen Verbrennungsmotor der Nutzeinheit). Der Verbrauchstoff wird mittels eines beweglichen Förderanschlusses einer Wartungsstation zu einem Versorgungseingang (z.B. Schmiernippel, Tanköffnung) der Nutzeinheit gefördert. Für die Förderung des Verbrauchstoffes wird zunächst der gesuchte Versorgungseingang der Nutzeinheit identifiziert. Danach wird der Förderanschluss mit dem identifizierten Versorgungseingang fluidisch verbunden. Diese fluidische Verbindung ist - ggf. neben weiteren Betriebsbedingungen - Voraussetzung für eine Förderung des Verbrauchstoffes zum Versorgungseingang. Nach beendeter Förderung des Verbrauchstoffes wird der Förderanschluss von dem Versorgungseingang wieder fluidisch getrennt.

Die vorgenannten Verfahrensschritte ermöglichen eine einfache Verfahrensstruktur, welche mit geringem datentechnischen Aufwand eine automatisierte und effiziente Versorgung der Nutzeinheit mit einem Verbrauchstoff bietet. Durch die automatisierte Versorgung der Nutzeinheit mit dem jeweiligen Verbrauchstoff kann herangezogenes Wartungs- oder Servicepersonal entsprechend entlastet werden.

Der Förderanschluss und/oder der Versorgungseingang können während der Durchführung des Verfahrens vorzugsweise derart geöffnet und geschlossen werden, dass mit hoher Genauigkeit eine gewünschte oder vorbestimmte Menge des Verbrauchstoffes gefördert wird. Hierzu sind beispielsweise geeignete technische Steuermittel vorgesehen, welche den Förderanschluss und/oder den Versorgungseingang entsprechend ansteuern. Zu diesem Zweck kann der Förderanschluss und/oder der Versorgungseingang jeweils ein geeignetes ansteuerbares Ventil aufweisen.

Die Wartungsstation dient als Vorrichtung für eine effiziente und automatisierte Durchführung des Verfahrens. Für die Wartungsstation kann es vorteilhaft sein, sie teilweise (neben einem stationären Teilbereich) oder vollständig als eine mobile Wartungseinheit auszugestalten. Diese mobile Wartungseinheit kann luftgestützt (z.B. fliegende Drohne) und/oder landgestützt (z.B. beweglicher Roboterarm, fahrendes Service-Vehikel) sein. Eine zumindest teilweise mobile Wartungsstation kann unter bestimmten Rahmenbedingungen eine Versorgung der mobilen Nutzeinheit mit einem Verbrauchstoff noch effizienter und ökonomischer durchführen. Dies ist beispielsweise der Fall, wenn eine Nutzeinheit mehrere Versorgungseingänge aufweist oder die Versorgungseingänge bei unterschiedlichen Typen von Nutzeinheiten unterschiedliche Positionen haben.

Vorteilhaft wird die Durchführung einzelner Verfahrensschritte des Verfahrens mittels einer Steuereinheit in der Wartungsstation gesteuert. Die Steuereinheit enthält vorzugsweise sämtliche für eine Datenverarbeitung und Steuerung des Verfahrens erforderlichen Funktionen wie etwa einen Mikroprozessor, einen Speicher sowie geeignete Algorithmen zur Verarbeitung und Bewertung von Daten und ggf. ermittelter Vergleichsergebnisse sowie zur Einleitung weiterer Verfahrensschritte wie etwa die Beendigung der Förderung des Verbrauchstoffes zum Versorgungseingang der Nutzeinheit.

Vorzugsweise ist die Steuereinheit in der Lage, eine mobile Wartungseinheit (z.B. Drohne, Roboterarm) mit dem daran befestigten und somit ebenfalls mobilen bzw. beweglichen Förderanschluss zu der Position des Versorgungseinganges zu navigieren.

Eine Bewegungssteuerung des Förderanschlusses zur Position des identifizierten Versorgungseinganges wird vorzugsweise dadurch unterstützt, dass die Wartungsstation eine geeignete Sensorik aufweist. Die von der Sensorik generierten Signale bzw. Daten (z.B. Bilddaten) können von der Wartungsstation, insbesondere in deren Steuereinheit, verarbeitet werden. Abhängig von der Verarbeitung der Sensorik-Daten kann eine Bewegungssteuerung des Förderanschlusses oder der mobilen Wartungseinheit erfolgen.

Die Sensorik kann technologisch unterschiedliche Sensoren, Fühler oder Signalempfänger enthalten. Besonders geeignet ist vorzugsweise ein optischer Sensor, insbesondere eine Kamera (z.B. Monokular, Stereo). Weitere geeignete Sensoren sind UV-Sensoren, Ultraschall-Sensoren, Radar-Sensoren, Antennen.

Bezüglich der Antennen-Technologie handelt es sich insbesondere um eine RFID-Antenne. Beispielsweise kann diese RFID-Antenne den mit einer RFID-Kennung gekennzeichneten Versorgungseingang der Nutzeinheit und dessen Position identifizieren. Alternativ oder zusätzlich zu einer Positionserkennungsfunktion kann eine geeignete Sensorik eine Funktion zur Merkmalserkennung an der Nutzeinheit haben, um auf Basis dieser Merkmalserkennung den Förderanschluss in Richtung des Versorgungseinganges zu navigieren.

In einer bevorzugten Ausführungsform weist der Förderanschluss ein ansteuerbares Anschlussventil auf und/oder der Versorgungseingang weist ein ansteuerbares Eingangsventil auf. Hierdurch kann der Förderanschluss und/oder der Versorgungseingang während der Durchführung des Verfahrens technisch einfach und kontrolliert geöffnet und geschlossen werden. Die Verwendung von Ventilen unterstützt eine sicherheitstechnisch kontrollierte und leckagefreie Förderung des Verbrauchstoffes. Eine Ansteuerung mindestens eines dieser Ventile erfolgt vorzugsweise durch die vorgenannte Steuereinheit. Eine Ansteuerung zum Öffnen und Schließen mindestens eines der Ventile unterstützt einen automatisierten und effizienten Ablauf des Verfahrens zur Versorgung der Nutzeinheit.

Um die Zufuhr des Verbrauchstoffes zu dem Förderanschluss - insbesondere bei größeren Fördermengen des Verbrauchstoffes - mit geringem technischen Aufwand zu realisieren, ist der Förderanschluss vorteilhaft an eine Förderleitung angeschlossen, welche auf- und abrollbar im Bereich der Wartungsstation gelagert ist.

Die Förderleitung dient dem Transport des Verbrauchstoffes von einer zentralen Quelle, z.B. einem stationären Vorratsbehälter, hin zum Förderanschluss. Die Lagerung der Förderleitung erfolgt insbesondere an einer rotationsbeweglichen Lagertrommel, wie sie beispielsweise von Elektrokabel-Trommeln her bekannt ist. Eine raumsparende effektive Arbeitslänge der Förderleitung während der Fördervorgänge wird vorteilhaft dadurch erzielt, dass die Rotationsbewegung der Lagertrommel durch eine Antriebseinheit (z.B. Elektromotor) in Abhängigkeit von einer erfassten Bewegung des Förderanschlusses oder einer den Förderanschluss tragenden Wartungs-Drohne gesteuert wird. Zusätzlich kann die Wartungs-Drohne auch mit einer Energieversorgungsleitung und/oder einer Datenleitung verbunden sein.

Vorzugsweise ist der zur Nutzeinheit hin zu fördernde Verbrauchstoff in einem Vorratsbehälter gelagert, welcher mit dem Förderanschluss fluidisch verbunden ist. Diese fluidische Verbindung kann als dauerhafte oder trennbare Verbindung ausgeführt sein. Der Vorratsbehälter kann oberirdisch oder unterirdisch angeordnet sein und ist insbesondere Bestandteil der Wartungsstation. Dabei kann der Vorratsbehälter Bestandteil eines stationären Bereiches der Wartungsstation sein oder an einer mobilen Wartungseinheit angeordnet sein.

Beispielsweise ist der Vorratsbehälter als eine mit dem Verbrauchstoff gefüllte Kartusche in einer als Wartungs-Drohne ausgebildeten mobilen Wartungseinheit integriert. Bei einer weiteren Ausführungsform ist die mobile Wartungseinheit als Roboterarm mit geeigneten Gelenkelementen und Mitteln zur Längenverstellung des Roboterarmes ausgebildet, um den Roboterarm mit einem daran befestigten Förderanschluss in verschiedene Positionen und Ausrichtungen relativ zur Nutzeinheit zu navigieren. Der Roboterarm kann eine interne Förderleitung aufweisen, welche mit dem Förderanschluss fluidisch verbunden ist. Alternativ kann der Roboterarm eine (z.B. schlauchartige) externe Förderleitung tragen, welche mit dem Förderanschluss fluidisch verbunden ist. Der Verbrauchstoff wird von einem Vorratsbehälter über die Förderleitung zu dem Förderanschluss transportiert.

Unabhängig von der Ausführungsform der Wartungsstation erfolgt der Transport des Verbrauchstoffes von einem Vorratsbehälter zu dem Förderanschluss vorzugsweise mit einem Förderdruck. Beispielsweise ist hierzu eine geeignete Förderpumpe vorgesehen oder eine mit Verbrauchstoff gefüllte Kartusche steht unter Druck.

Vorteilhaft wird die Förderung des Verbrauchstoffes in Abhängigkeit von einem Vergleich mit einem vorbestimmten Grenzwert beendet. Das Heranziehen eines vorbestimmten Grenzwertes für die Entscheidung, ob die Förderung des Verbrauchstoffes beendet wird, unterstützt eine zeitsparende Versorgung der Nutzeinheit mit dem Verbrauchstoff. Außerdem unterstützt die Berücksichtigung des Grenzwertes einen sparsamen Einsatz des verwendeten Verbrauchstoffes. Beispielsweise kann abhängig von dem Ergebnis eines Vergleiches eines aktuellen Förderzustandes (z.B. aktuell geförderte Menge eines Verbrauchstoffes) mit dem Grenzwert entschieden werden, ob eine Versorgung der Nutzeinheit mit dem Verbrauchstoff beendet werden soll oder nicht. Der Grenzwert ist beispielsweise ein vorbestimmter Füllstand an der Nutzeinheit (z.B. im Tankbehälter für Kraftstoff) oder eine vorbestimmte Menge (z.B. in Liter), welche aus einem Vorratsbehälter zum Versorgungseingang der Nutzeinheit gefördert werden soll.

Vorteilhaft wird die verfahrensgemäße automatisierte Versorgung der Nutzeinheit mit einem Verbrauchstoff in Anwendungsbereichen eingesetzt, in denen spezifische Automatisierungsfunktionen zur Effizienzsteigerung besonders geeignet sind, z.B. in großen landwirtschaftlichen Betrieben oder bei einer (teil-)autonomen Fahrzeugflotte.

Vorzugsweise handelt es sich bei der mobilen Nutzeinheit um ein Nutzfahrzeug (z.B. landwirtschaftliche oder forstwirtschaftliche Maschine, Baumaschine) und/oder um ein Anbaugerät (z.B. Bodenbearbeitungsgerät, Pflug). Das Anbaugerät kann ebenfalls als eine mobile Nutzeinheit betrachtet werden, soweit es zumindest im Arbeitseinsatz beweglich ist. Insbesondere ist das Anbaugerät an das Nutzfahrzeug (z.B. Traktor) angekoppelt und hierdurch zumindest während des Arbeitseinsatzes des Nutzfahrzeugs beweglich.

Das Nutzfahrzeug ist insbesondere als ein (teil-)autonomes Fahrzeug ausgebildet. Mit den offenbarten Verfahrensschritten zur Versorgung mit einem Verbrauchstoff lässt sich eine automatisierte Handhabung des Fahrzeugs effizient unterstützen.

Das Verfahren ermöglicht eine automatisierte und effiziente Versorgung der mobilen Nutzeinheit mit für einen Betrieb der Nutzeinheit relevanten unterschiedlichen Verbrauchstoffen. Grundsätzlich ist der Verbrauchstoff ein Betriebsstoff, der durch den Betrieb der Nutzeinheit zumindest teilweise aufgebraucht wird und deshalb nachgefördert werden muss und/oder der aufgrund bestimmter Eigenschaften (z.B. Qualitätsminderung, Verunreinigung) ausgetauscht und hierdurch ebenfalls nachgefördert werden muss.

Beispielsweise handelt es sich bei dem Verbrauchstoff um einen Schmierstoff (insbesondere Öl, Fett), wie er z.B. für (Rad-) Achsen und andere bewegliche Teile oder Komponenten der Nutzeinheit benötigt wird. In einem weiteren Anwendungsfall ist der Verbrauchstoff ein Kraftstoff für einen Verbrennungsmotor der Nutzeinheit.

Das erfindungsgemäße Verfahren wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: ein erstes Ausführungsbeispiel des erfindungsgemäßen Verfahrens zur Versorgung einer mobilen Nutzeinheit mit einem Verbrauchstoff, und
- Fig. 2: ein weiteres Ausführungsbeispiel des erfindungsgemäßen Verfahrens zur Versorgung einer mobilen Nutzeinheit mit einem Verbrauchstoff.

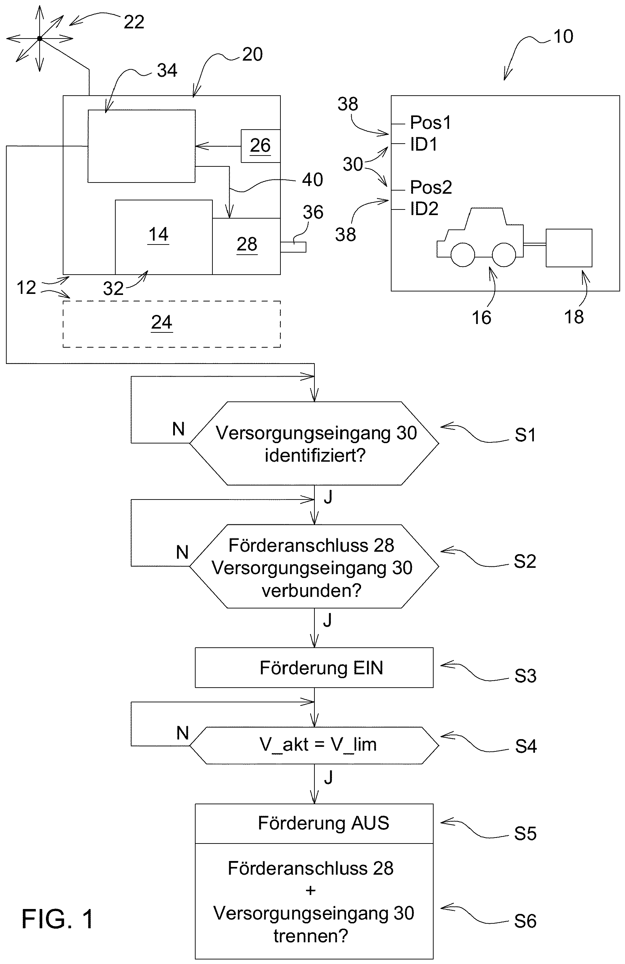

Fig. 1 zeigt schematisch eine mobile Nutzeinheit 10 und eine Wartungsstation 12. Die Wartungsstation 12 dient zur Wartung der Nutzeinheit 10, insbesondere zur Versorgung der Nutzeinheit 10 mit einem Verbrauchstoff 14 (z.B. ein Schmierstoff). Verschiedene Verfahrensschritte des Verfahrens zur Versorgung der Nutzeinheit 10 mit dem Verbrauchstoff 14 sind in Fig. 1 in Form eines Flussdiagrammes dargestellt.

Die mobile Nutzeinheit 10 besteht beispielsweise aus einem Traktor 16 und/oder einem daran angekoppelten Anbaugerät 18, z.B. einem Pflug oder einem anderen Bodenbearbeitungsgerät. Die Nutzeinheit 10 wird - entweder mit einem Fahrer oder als ein (teil-)autonomes Fahrzeug ohne Fahrer - zur Wartung, insbesondere zur Versorgung mit einem Verbrauchstoff an die Wartungsstation 12 herangeführt. Je nach Ausführungsform der Wartungsstation 12 kann diese zur Verfahrensdurchführung auch an die Nutzeinheit 10 heranbewegt werden.

Vorzugsweise enthält die Wartungsstation 12 eine mobile Wartungseinheit 20 (z.B. eine Drohne), welche relativ zur mobilen Nutzeinheit 10 bewegungsgesteuert wird, was durch die Pfeilrichtungen 22 angedeutet ist. Optional - und deshalb in Fig. 1 mit gestrichelten Linien angedeutet - kann die Wartungsstation 12 auch einen stationären Teilbereich 24 aufweisen, welcher dann zumindest teilweise technische Funktionen enthalten kann, welche ansonsten in der mobilen Wartungseinheit 20 realisiert sind.

An der Wartungseinheit 20 sind eine Sensorik 26 (z.B. RFID-Antenne und/oder Kamera) und ein Förderanschluss 28 angeordnet. Als Bestandteil der mobilen Wartungseinheit 20 ist auch der Förderanschluss 28 beweglich. Mittels des Förderanschlusses 28 wird der Verbrauchstoff 14 zu einem Versorgungseingang 30 der Nutzeinheit 10 gefördert.

Der zu fördernde Verbrauchstoff 14 ist in einem als eine austauschbare Kartusche ausgebildeten Vorratsbehälter 32 gelagert. Zumindest während des Förderungsvorganges ist der Förderanschluss 28 mit dem Vorratsbehälter 32 fluidisch verbunden.

Die von der Sensorik 26 generierten Daten (z.B. Bilddaten) werden einer Steuereinheit 34 zugeführt, welche die für eine Datenverarbeitung und eine Steuerung einzelner Verfahrensschritte üblichen Bestandteile wie etwa einen Mikroprozessor, Speicher, Software-Programme, geeignete Algorithmen und dergleichen enthält. Die Steuereinheit 34 ist vorzugsweise in der Wartungseinheit 20 integriert.

Der jeweilige Versorgungseingang 30 wird mittels der Sensorik 26 identifiziert. Hierzu wird von der Sensorik 26 beispielsweise eine ID-Kennung ID1, ID2 und/oder eine Position Pos1, Pos2 identifiziert. Bei diesen vorgenannten Beispielen weist die Sensorik 26 eine RFID-Antenne und/oder einen Positionssensor auf. In der Steuereinheit 34 werden die von der Sensorik 26 generierten Daten verarbeitet, so dass die Steuereinheit 34 die mobile Wartungseinheit 20 und somit den Förderanschluss 28 zu dem jeweiligen Versorgungseingang 30 navigiert.

Für eine fluidische Verbindung zwischen dem Förderanschluss 28 und dem Versorgungseingang 30 kann beispielsweise an dem Förderanschluss 28 eine Förderdüse 36 angebracht sein, welche an einen Nippel 38 des Versorgungseinganges 30 angeschlossen wird.

Für eine technisch einfache Förderung des Verbrauchstoffes 14 ist der Verbrauchstoff 14 in dem Vorratsbehälter 32 vorzugsweise unter Druck gelagert. Der Verbrauchstoff 14 wird dann automatisch durch den Förderanschluss 28 transportiert, sobald letzterer einen Durchfluss des Verbrauchstoffes 14 erlaubt. Dieser Durchfluss bzw. ein Unterbrechen des Durchflusses kann beispielsweise von der Steuereinheit 34 durch entsprechende Steuersignale 40 gesteuert werden, welche die Steuereinheit 34 an den Förderanschluss 28 sendet.

Während der Durchführung des Verfahrens zur Versorgung der Nutzeinheit 10 mit dem Verbrauchstoff 14 wird der mit dem Verbrauchstoff 14 zu versorgende Versorgungseingang 30 identifiziert und von der Wartungseinheit 20 angesteuert (Schritt S1). Sobald der Förderanschluss 28 die richtige Position relativ zum identifizierten Versorgungseingang 30 erreicht hat, wird davon ausgegangen, dass der Förderanschluss 28 und der Versorgungseingang 30 miteinander fluidisch verbunden sind (Schritt S2). Sodann steuert die Steuereinheit 34 über Steuersignale 40 den Förderanschluss 28 an, um einen Durchfluss des Verbrauchstoffes 14 zu ermöglichen (Förderung EIN, Schritt S3). Der vorzugsweise unter Druck in dem Vorratsbehälter 32 gelagerte Verbrauchstoff 14 wird dann automatisch zum Versorgungseingang 30 gefördert.

Die zum Versorgungseingang 30 geförderte Menge bzw. ein Volumen V_akt (z.B. in Liter oder in cm³) des Verbrauchstoffes 14 wird auf geeignete Weise (z.B. mittels einer Durchfluss-Sensorik an dem Förderanschluss) ermittelt und mit einem vorbestimmten Grenzwert in Form eines vorbestimmten Grenzvolumens V_lim des Verbrauchstoffes 14 verglichen (Schritt S4).

Sobald das Grenzvolumen V_lim erreicht ist, wird die Förderung des Verbrauchstoffes 14 beendet (Förderung AUS, Schritt S5). Dies wird beispielsweise erreicht, indem die Steuereinheit 34 entsprechende Steuersignale 40 an den Förderanschluss 28 zur Unterbrechung des Durchflusses sendet.

Nach beendeter Förderung des Verbrauchstoffes 14 wird der Förderanschluss 28 von dem Versorgungseingang 30 fluidisch getrennt (Schritt S6). Zu diesem Zweck wird die Wartungseinheit 20 von dem Versorgungseingang 30 weg in Richtung einer anderen Position navigiert. Diese andere Position ist beispielsweise ein nächster zu versorgender Versorgungseingang 30 oder eine Parkposition der Wartungsstation 12.

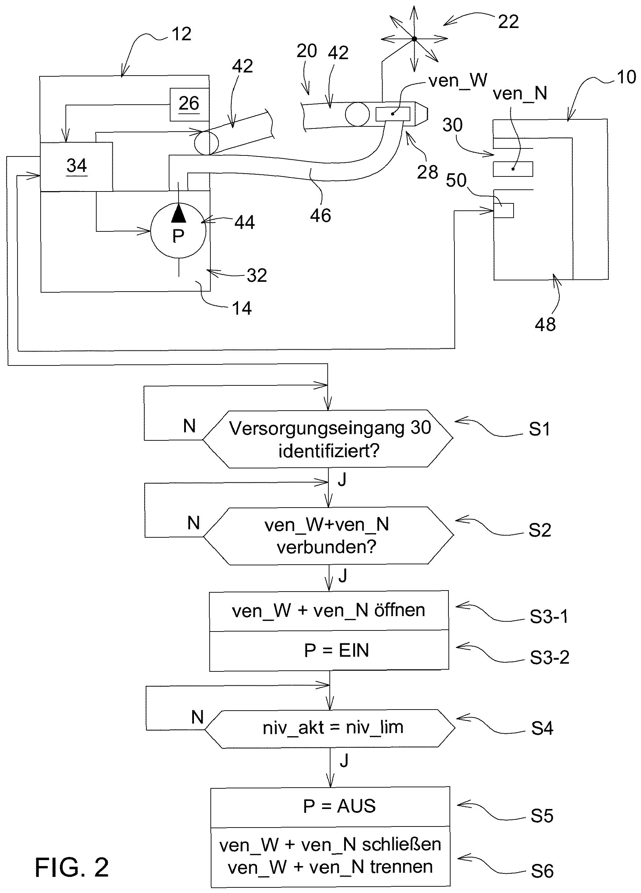

In Fig. 2 weist die Wartungsstation 12 einen beweglichen Roboterarm 42 als mobile Wartungseinheit 20 auf. Der Roboterarm 42 ist hier lediglich schematisch dargestellt und kann einen oder mehrere bewegliche Armabschnitte und geeignete Gelenke aufweisen.

In dem (oberirdisch oder unterirdisch angeordneten) Vorratsbehälter 32 ist als Verbrauchstoff 14 beispielsweise Kraftstoff (z.B. Diesel) für einen Verbrennungsmotor der Nutzeinheit 10 bzw. des Traktors 16 gelagert. Eine im Vorratsbehälter 32 oder alternativ außerhalb des Vorratsbehälters 32 angeordnete Förderpumpe 44 wird von der Steuereinheit 34 angesteuert, um während der Verfahrensdurchführung den Verbrauchstoff 14 zu einem Anschlussventil ven_W des Förderanschlusses 28 zu transportieren. Für den Transport ist eine flexible Förderleitung 46 vorgesehen, welche mit einem Ausgang der Förderpumpe 44 und mit dem Förderanschluss 28 bzw. dessen Anschlussventil ven_W fluidisch verbunden ist. Die Förderleitung 46 ist für ihre flexible Beweglichkeit in geeigneter Weise an einer oder mehreren Stellen mechanisch fixiert.

Analog zur Ausführungsform gemäß Fig. 1 wird bei der Variante gemäß Fig. 2 zur Versorgung der Nutzeinheit 10 mit dem Verbrauchstoff 14 zunächst der gesuchte Versorgungseingang 30 identifiziert und von der Wartungseinheit 20 bzw. dem Roboterarm 42 angesteuert (Schritt S1). Hierbei werden für eine ordnungsgemäße Bewegungssteuerung des Roboterarmes 42 Signale bzw. Daten der Sensorik 26 in der Steuereinheit 34 verarbeitet. Mit Hilfe von entsprechenden Steuersignalen der Steuereinheit 34 und weiteren geeigneten Mitteln wird der Roboterarm 42 bewegungsgesteuert.

Sobald der Förderanschluss 28 die richtige Position relativ zum identifizierten Versorgungseingang 30 erreicht hat, wird das Anschlussventil ven_W mit einem Eingangsventil ven_N des Versorgungseinganges 30 gekoppelt bzw. fluidisch verbunden (Schritt S2). Sodann werden die beiden Ventile ven_W, ven_N (vorzugsweise auf geeignete Weise durch die Steuereinheit 34) derart angesteuert, dass beide Ventile ven_W, ven_N für einen Durchfluss des Verbrauchstoffes 14 geöffnet sind (Schritt S3-1). Danach wird im Schritt S3-2 die Förderpumpe 44 für den Transport des Verbrauchstoffes 14 aktiviert (P = EIN).

Der Versorgungseingang 30 und dessen Eingangsventil ven_N sind an einem Eingangsbereich eines Tankbehälters 48 der Nutzeinheit 10 angeordnet. An dem Tankbehälter 48 ist ein Niveausensor 50 angeordnet. Letzterer ermittelt, ob der in den Tankbehälter zu fördernde Verbrauchstoff 14 ein maximales Niveau d.h. ein vorbestimmtes Grenzniveau niv_lim erreicht hat (Schritt S4).

Sobald das Grenzniveau niv_lim erreicht ist, empfängt die Steuereinheit 34 (kabelgebunden oder kabellos) entsprechende Sensorsignale von dem Niveausensor. Die Steuereinheit 34 beendet dann die Förderung des Verbrauchstoffes 14, indem sie die Förderpumpe 44 deaktiviert (P = AUS, Schritt S5).

Nach beendeter Förderung des Verbrauchstoffes 14 werden die beiden Ventile ven_W, ven_N (vorzugsweise auf geeignete Weise durch die Steuereinheit 34) derart angesteuert, dass beide Ventile ven_W, ven_N für einen Durchfluss des Verbrauchstoffes 14 geschlossen bzw. unterbrochen sind (Schritt S6).

Außerdem wird im Schritt S6 der Förderanschluss 28 von dem Versorgungseingang 30 fluidisch getrennt. Zu diesem Zweck wird der Roboterarm 42 von dem Versorgungseingang 30 weg in Richtung einer anderen Position navigiert. Diese andere Position ist beispielsweise ein nächster zu versorgender Versorgungseingang 30 oder eine Parkposition des Roboterarmes 42 an der Wartungsstation 12.

## Patentansprüche

1. Verfahren zur Versorgung einer mobilen Nutzeinheit (10, 16, 18) mit einem Verbrauchstoff (14), welcher mittels eines beweglichen Förderanschlusses (28) einer Wartungsstation (12, 20, 42) zu einem Versorgungseingang (30) der Nutzeinheit (10) gefördert wird, wobei
- der Versorgungseingang (30) der Nutzeinheit (10, 16, 18) identifiziert wird,
- der Förderanschluss (28) mit dem identifizierten Versorgungseingang (30) fluidisch verbunden wird,
- der Verbrauchstoff (14) zum Versorgungseingang (30) gefördert wird,
- nach beendeter Förderung des Verbrauchstoffes (14) der Förderanschluss (28) von dem Versorgungseingang (30) fluidisch getrennt wird.

2. Verfahren nach Anspruch 1, **dadurch gekennzeichnet, dass** die Wartungsstation (12) eine mobile Wartungseinheit (20, 42) enthält oder aus einer mobilen Wartungseinheit (20, 42) besteht.

3. Verfahren nach Anspruch 1 oder 2, **dadurch gekennzeichnet, dass** die Wartungsstation (12, 20) eine Steuereinheit (34) zur Steuerung einzelner oder sämtlicher Verfahrensschritte (S1 - S6) des Verfahrens aufweist.

4. Verfahren nach einem der vorhergehenden Ansprüche, **dadurch gekennzeichnet, dass** der Versorgungseingang (30) mittels einer an der Wartungsstation (12, 20) angeordneten Sensorik (26) identifiziert wird.

5. Verfahren nach einem der vorhergehenden Ansprüche, **dadurch gekennzeichnet, dass** der Förderanschluss (28) ein ansteuerbares Anschlussventil (ven_W) aufweist und/oder der Versorgungseingang (30) ein ansteuerbares Eingangsventil (ven_N) aufweist.

6. Verfahren nach einem der vorhergehenden Ansprüche, **dadurch gekennzeichnet, dass** der zu fördernde Verbrauchstoff (14) in einem mit dem Förderanschluss (28) fluidisch verbundenen Vorratsbehälter (32) gelagert ist.

7. Verfahren nach einem der vorhergehenden Ansprüche, **dadurch gekennzeichnet, dass** die Förderung des Verbrauchstoffes (14) in Abhängigkeit von einem Vergleich mit einem vorbestimmten Grenzwert (V_lim, niv_lim) beendet wird.

8. Verfahren nach einem der vorhergehenden Ansprüche, **gekennzeichnet durch** ein Nutzfahrzeug (16) und/oder ein Anbaugerät (18) als mobile Nutzeinheit (10).

9. Verfahren nach Anspruch 8, **dadurch gekennzeichnet, dass** das Nutzfahrzeug (16) ein autonomes Fahrzeug ist.

10. Verfahren nach einem der vorhergehenden Ansprüche, **dadurch gekennzeichnet, dass** der Verbrauchstoff (14) aus einem der folgenden Stoffe ausgewählt wird:
- Schmierstoff für eine bewegliche Komponente,
- Kraftstoff für einen Verbrennungsmotor.
